(19) Europäisches Patentamt
European Patent Office
Office européen des brevets

(11) **EP 4 672 358 A1**

(12) **EUROPEAN PATENT APPLICATION**
published in accordance with Art. 153(4) EPC

(43) Date of publication:
**31.12.2025 Bulletin 2026/01**

(21) Application number: **24760117.2**

(22) Date of filing: **06.02.2024**

(51) International Patent Classification (IPC):
$H01M\ 4/134^{(2010.01)}$    $H01M\ 4/133^{(2010.01)}$
$H01M\ 4/1393^{(2010.01)}$    $H01M\ 4/1395^{(2010.01)}$
$H01M\ 4/36^{(2006.01)}$    $H01M\ 4/38^{(2006.01)}$
$H01M\ 4/587^{(2010.01)}$    $H01M\ 4/62^{(2006.01)}$

(52) Cooperative Patent Classification (CPC):
**H01M 4/133; H01M 4/134; H01M 4/1393;**
**H01M 4/1395; H01M 4/36; H01M 4/38;**
**H01M 4/587; H01M 4/62;** Y02E 60/10

(86) International application number:
**PCT/JP2024/003932**

(87) International publication number:
**WO 2024/176815 (29.08.2024 Gazette 2024/35)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **21.02.2023 JP 2023025600**

(71) Applicant: **Panasonic Intellectual Property**
**Management Co., Ltd.**
**Kadoma-shi, Osaka 571-0057 (JP)**

(72) Inventors:
• **TANIGUCHI, Akihiro**
**Kadoma-shi, Osaka 571-0057 (JP)**
• **INOUE, Kaoru**
**Kadoma-shi, Osaka 571-0057 (JP)**

(74) Representative: **Novagraaf International SA**
**Chemin de l'Echo 3**
**1213 Onex, Geneva (CH)**

(54) **NEGATIVE ELECTRODE FOR SECONDARY BATTERIES, SECONDARY BATTERY, AND METHOD FOR PRODUCING NEGATIVE ELECTRODE FOR SECONDARY BATTERIES**

(57)    A negative electrode for secondary batteries is provided, the negative electrode being able to be inhibited from swelling.

The negative electrode for secondary batteries comprises a negative-electrode current collector and a negative-electrode mix layer disposed on the negative-electrode current collector, and is characterized in that the negative-electrode mix layer comprises a negative-electrode active material, which includes a carbon material and an Si-based material, and an organic compound having a solubility in water of 0.05 g/100 mL or less. The negative electrode is also characterized in that a pore diameter distribution of the negative-electrode mix layer determined by mercury porosimetry has two peaks R1 and R2.

EP 4 672 358 A1

**Description**

TECHNICAL FIELD

The present disclosure relates to a negative electrode for secondary batteries, a secondary battery, and a method for producing a negative electrode for secondary batteries.

BACKGROUND

Si-based materials are currently attracting attention as materials capable of increasing battery capacity. Si-based materials are capable of electrochemically storing and releasing lithium ions, and enable charging and discharging with very large capacity, compared to carbon materials such as graphite.

For example, Patent Literature 1 discloses a negative electrode active material for lithium ion secondary batteries that contains a Si-based material represented by $SiO_x$ (0 < x < 2) and a carbon material, and has internal voids.

CITATION LIST

PATENT LITERATURE

Patent Literature 1: JP 2013-219059 A

SUMMARY

By the way, although an Si-based material can increase the capacity of a secondary battery, the Si-based material has a problem that a negative electrode is swelled because the Si-based material significantly expands and contracts in volume due to charging and discharging.

Therefore, an object of the present disclosure is to provide a negative electrode for secondary batteries that is capable of suppressing swelling of the negative electrode, a secondary battery, and a method for producing the negative electrode for secondary batteries.

A negative electrode for secondary batteries according to an aspect of the present disclosure includes a negative electrode current collector and a negative electrode mixture layer disposed on the negative electrode current collector, wherein the negative electrode mixture layer contains a negative electrode active material containing a carbon material and an Si-based material, and an organic compound having a solubility in water of less than or equal to 0.05 g/100 mL, and a pore size distribution of the negative electrode mixture layer measured by mercury porosimetry has two peak values R1 and R2.

A secondary battery according to an aspect of the present disclosure includes the negative electrode for secondary batteries.

A method for producing a negative electrode for secondary batteries according to an aspect of the present disclosure includes: a first step of applying a negative electrode paste containing a negative electrode active material containing a carbon material and a Si-based material and an organic compound having a solubility in water of less than or equal to 0.05 g/100 mL to a negative electrode current collector to prepare an applied film, and then rolling the applied film; and a second step of forming a negative electrode mixture layer by subjecting the applied film to a heat treatment after the first step, wherein a pore size distribution of the negative electrode mixture layer measured by mercury porosimetry has two peak values R1 and R2.

According to the present disclosure, it is possible to provide a negative electrode for secondary batteries that is capable of suppressing swelling of the negative electrode, a secondary battery, and a method for producing the negative electrode for secondary batteries.

BRIEF DESCRIPTION OF DRAWINGS

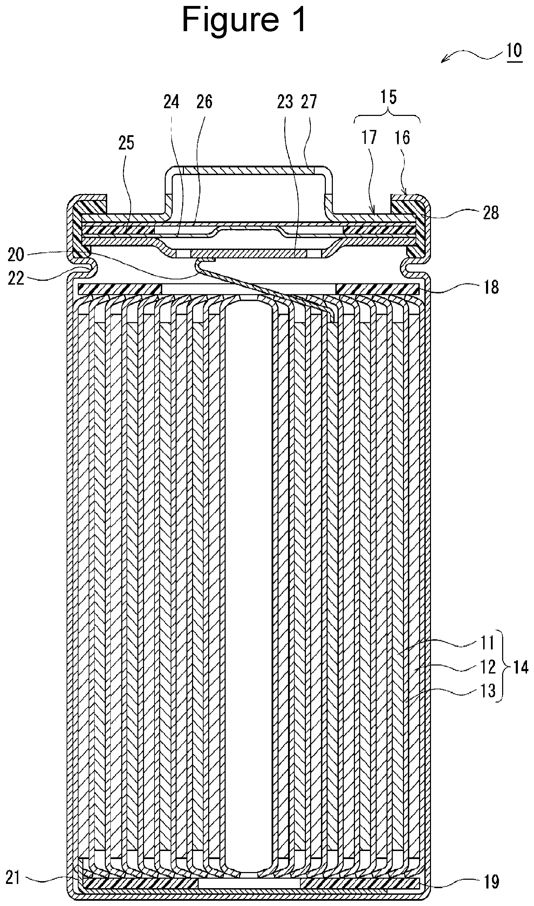

FIG. 1 is a sectional view of a secondary battery according to an example of an embodiment.

DESCRIPTION OF EMBODIMENTS

Embodiments of a negative electrode active material for secondary batteries and a secondary battery according to the present disclosure will be described in detail.

FIG. 1 is a sectional view of a secondary battery according to an example of an embodiment. The secondary battery 10 illustrated in FIG. 1 includes a wound electrode assembly 14 in which a positive electrode 11 and a negative electrode 12 are wound with a separator 13 interposed between the positive electrode 11 and the negative electrode 12, a non-aqueous electrolyte, insulating plates 18 and 19 disposed on upper and lower portions of the electrode assembly 14, respectively, and a battery case 15 housing the above-described members. The battery case 15 includes a bottomed cylindrical case body 16 and a sealing assembly 17 that seals an opening of the case body 16. Note that, instead of the wound electrode assembly 14, an electrode assembly having another form, such as a stacked electrode assembly in which positive electrodes and negative electrodes are alternately stacked with separators interposed between the positive electrodes and the negative electrodes, may be applied. Furthermore, examples of the battery case 15 include metal cases having a cylindrical shape, a square shape, a coin shape, a button shape, and the like, and resin cases formed by laminating resin sheets (so-called laminate type).

The non-aqueous electrolyte is, for example, an electrolyte having lithium ion conductivity, and may be a liquid electrolyte (electrolytic solution) or a solid electrolyte.

The liquid electrolyte (electrolytic solution) contains, for example, a non-aqueous solvent and an electrolyte salt dissolved in the non-aqueous solvent. Examples of the non-aqueous solvent include esters, ethers, nitriles, amides, and mixed solvents of greater than or equal to two of them. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product in which at least a part of hydrogen in these solvents is substituted with a halogen atom such as fluorine (for example, fluoroethylene carbonate or the like). As the electrolyte salt, for example, a lithium salt such as $LiPF_6$ is used.

As the solid electrolyte, for example, a solid or gel polymer electrolyte, an inorganic solid electrolyte, or the like can be used. As the inorganic solid electrolyte, a material known for all-solid-state lithium ion secondary batteries and the like (for example, an oxide-based solid electrolyte, a sulfide-based solid electrolyte, a halogen-based solid electrolyte, or the like) can be used. The polymer electrolyte contains, for example, a lithium salt and a matrix polymer or contains, for example, a non-aqueous solvent, a lithium salt, and a matrix polymer. As the matrix polymer, for example, a polymer material that absorbs a non-aqueous solvent and gelates is used. Examples of the polymer material include a fluororesin, an acrylic resin, and a polyether resin. The non-aqueous electrolyte is an example, and may be an aqueous electrolyte as long as it is applicable.

The case body 16 is, for example, a bottomed cylindrical metal container. A gasket 28 is provided between the case body 16 and the sealing assembly 17 to ensure airtightness within the battery. The case body 16 has a projecting portion 22 in which, for example, a part of a side surface portion of the case body 16 projects inward to support the sealing assembly 17. The projecting portion 22 is preferably formed in an annular shape along the circumferential direction of the case body 16, and supports the sealing assembly 17 on its top surface.

The sealing assembly 17 has a structure in which a filter 23, a lower vent member 24, an insulating member 25, an upper vent member 26, and a cap 27 are sequentially stacked from the electrode assembly 14 side. Each member constituting the sealing assembly 17 has, for example, a disk shape or a ring shape, and the members excluding the insulating member 25 are electrically connected to each other. The lower vent member 24 and the upper vent member 26 are connected to each other at their central portions, and the insulating member 25 is interposed between the circumferential portions of the lower vent member 24 and the upper vent member 26. When the internal pressure of the secondary battery 10 increases due to heat generated by an internal short circuit or the like, for example, the lower vent member 24 deforms so as to push the upper vent member 26 up toward the cap 27 side and breaks, so that a current path between the lower vent member 24 and the upper vent member 26 is cut off. When the internal pressure further increases, the upper vent member 26 breaks, and gas is discharged from an opening of the cap 27.

In the secondary battery 10 illustrated in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to a bottom surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to the bottom inner surface of the case body 16 by welding or the like, and the case body 16 serves as a negative electrode terminal.

The positive electrode 11, the negative electrode 12, and the separator 13 will be described below in detail.

[Positive Electrode]

The positive electrode 11 includes a positive electrode current collector and a positive electrode mixture layer disposed on the positive electrode current collector. The positive electrode current collector may be, for example, a foil of a metal, such as aluminum, that is stable in a potential range of the positive electrode 11, a film having the metal disposed on its surface layer, or the like. The positive electrode mixture layer includes, for example, a positive electrode active material, a binder, a conductive agent, and the like. The positive electrode 11 can be manufactured by, for example, applying a positive electrode paste including a positive electrode active material, a binder, a conductive agent, and the like to a surface of a positive electrode current collector, drying the applied film, and then rolling the applied film to form a positive electrode mixture layer on both surfaces of the positive electrode current collector.

Examples of the conductive agent contained in the positive electrode mixture layer include carbon materials such as carbon black, acetylene black, Ketjenblack, graphite, and carbon nanotubes. Examples of the binder included in the positive electrode mixture layer include fluororesins such as polytetrafluoroethylene (PTFE) and polyvinylidene fluoride (PVdF), polyacrylonitrile (PAN), polyimide, acrylic resins, polyolefins, styrene-butadiene rubber (SBR), cellulose derivatives such as carboxymethyl cellulose (CMC) and its salts, and polyethylene oxide (PEO).

Examples of the positive electrode active material include a lithium transition metal composite oxide. Examples of a metal element contained in the lithium transition metal composite oxide include Ni, Co, Mn, Al, B, Mg, Ti, V, Cr, Fe, Cu, Zn, Ga, Sr, Zr, Nb, In, Sn, Ta, and W. Among them, it is preferable that the lithium transition metal composite oxide contain at least one of Ni, Co, and Mn. A suitable example of the lithium transition metal composite oxide is a composite oxide represented by a general formula: $LiMO_2$ (where M is Ni and X, X is a metal element other than Ni, and the ratio of Ni is greater than or equal to 50 mol% and less than or equal to 95 mol% based on the total number of moles of the metal element except Li). Examples of X in the above formula include Co, Mn, Al, B, Mg, Ti, V, Cr, Fe, Cu, Zn, Ga, Sr, Zr, Nb, In, Sn, Ta, and W.

[Negative Electrode]

The negative electrode 12 includes a negative electrode current collector and a negative electrode mixture layer disposed on the negative electrode current collector. The negative electrode current collector may be, for example, a foil of a metal, such as copper, that is stable in a potential range of the negative electrode 12, a film having the metal disposed on its surface layer.

The negative electrode mixture layer contains a negative electrode active material containing a carbon material and a Si-based material, and an organic compound having a solubility in water of less than or equal to 0.05 g/100 mL. Hereinafter, the organic compound having a solubility in water of less than or equal to 0.05 g/100 mL may be referred to as a poorly soluble organic compound. In addition, the pore size distribution of the negative electrode mixture layer measured by mercury porosimetry has two peak values R1 and R2. The negative electrode mixture layer may contain a binder, a conductive agent, and the like. The negative electrode active material may contain a material capable of reversibly storing and releasing lithium ions in addition to the carbon material and the Si-based material. Examples of the binder and the conductive agent include those similar to those for the positive electrode 11. The content of the binder is, for example, greater than or equal to 1% by mass based on the total mass of the negative electrode active material. From the viewpoint of further suppressing swelling of the negative electrode, the content of the binder may be greater than or equal to 4% by mass, greater than or equal to 6% by mass, or greater than or equal to 8% by mass based on the total mass of the negative electrode active material. The upper limit of the content of the binder may be, for example, less than or equal to 20% by mass or less than or equal to 15% by mass based on the total mass of the negative electrode active material from the viewpoint of the energy density of the battery.

The negative electrode mixture layer having the pore size distribution showing the two peak values R1 and R2 is obtained by subjecting an applied film prepared by applying a negative electrode paste containing a poorly soluble organic compound onto a negative electrode current collector to a heat treatment in the stage of production of the negative electrode. The two peak values R1 and R2 are based on small pores formed by evaporation of moisture or the like in the applied film by the heat treatment of the applied film and relatively large pores formed by sublimation of the poorly soluble organic compound or the like. Even when the poorly soluble organic compound in the applied film is sublimated by the heat treatment of the applied film, several percents of the poorly soluble organic compound do not come out of the applied film and remains in the obtained negative electrode mixture layer. In any case, the expansion of the Si-based material due to charging and discharging is reduced by the pores formed in the negative electrode mixture layer and based on the peak value R1 and the pores formed in the negative electrode mixture layer and based on the peak value R2, and swelling of the negative electrode is suppressed. In addition, since the poorly soluble organic compound is hardly soluble in the negative electrode paste, aggregation due to recrystallization hardly occurs when the poorly soluble compound is sublimated. Therefore, since the pores derived from sublimation of the poorly soluble organic compound formed in the negative electrode mixture layer have a relatively uniform pore size, the electron conductivity of the negative electrode mixture layer is hardly inhibited, and an increase in the internal resistance of the battery may be suppressed.

<Pore Size Distribution Measured by Mercury Porosimetry>

In the mercury porosimetry, mercury is pressurized to infiltrate mercury into pores of a solid sample, and the diameter and volume of the pores are calculated from the pressure applied to the mercury and the amount of the mercury injected into the pores. When the mercury to which pressure P is applied can enter pores having a diameter D, the diameter D of the pores is determined from the pressure P, the contact angle θ of the mercury, and the surface tension σ of the mercury according to the following equation. The volume of the pores is calculated from the amount of the mercury injected into the pores. In the present disclosure, a pore size is a diameter of pores.

$-4\sigma\cos\theta = PD$

The pore size distribution measured by mercury porosimetry is a graph of log differential pore volume ($cm^3/g$) plotted against an average pore size ($\mu$m) in a section of each measurement point, where the horizontal axis indicates the pore size ($\mu$m) and the vertical axis indicates the log differential pore volume ($cm^3/g$). Here, in the present disclosure, each of the peak values in the pore size distribution means a pore size at a peak in the pore size distribution.

In the present embodiment, the pore size distribution of the negative electrode mixture layer measured by the mercury porosimetry may have the two peak values R1 and R2, but the peak value R2 is based on pores derived from sublimation of the organic compound, and is preferably greater than the peak value R1 from the viewpoint of further suppressing swelling of the negative electrode. The peak value R1 is preferably greater than or equal to 0.5 $\mu$m and less than or equal to 1.5 $\mu$m, and preferably greater than or equal to 0.8 $\mu$m and less than or equal to 1.2 $\mu$m. When the peak value R1 is greater than or equal to 0.5 $\mu$m, for example, the permeability of the electrolytic solution is improved and the capacity of the secondary battery is improved. When the peak value R1 is less than or equal to 1.5 $\mu$m, for example, the density of the negative electrode active material is improved and the capacity of the secondary battery is improved. The peak value R2 is preferably greater than or equal to 2 $\mu$m and less than or equal to 8 $\mu$m, and preferably greater than or equal to 4 $\mu$m and less than or equal to 8 $\mu$m. When the peak value R2 is greater than or equal to 2 $\mu$m, for example, the number of pores capable of reducing expansion and contraction of the Si-based material due to charging and discharging increases in the negative electrode mixture layer, and the effect of suppressing swelling of the negative electrode is improved. When the peak value R2 is less than or equal to 8 $\mu$m, for example, the density of the negative electrode active material is improved and the capacity of the secondary battery is improved.

The measurement of the pore size distribution by mercury porosimetry is performed on the negative electrode mixture layer before initial charging. For example, by using a measurement sample obtained by punching a negative electrode for secondary batteries into a predetermined shape before the initial charging, the pore size distribution of a negative electrode mixture layer contained in the measurement sample can be measured by mercury porosimetry. The measurement sample only needs to have at least the negative electrode mixture layer on its surface, and may have another configuration such as a negative electrode current collector.

The measurement of the pore size distribution by mercury porosimetry can be performed using, for example, an apparatus such as Autopore IV 9500 series manufactured by Micromeritics Instrument Corporation. In the measurement, the measurement sample is sealed in a sample container under an inert atmosphere, mercury is injected into the sample container, and pressure is applied to the mercury. Here, the pressure applied to the mercury is appropriately adjusted according to a pore size that the measurement sample can have, and is not particularly limited, but for example, measurement that is performed while the pressure is changed from 0.5 psi (3.4 kPa) to 60000 psi (413,400 kPa) is preferred in order to measure a wide range of pore sizes.

<Poorly Soluble Organic Compound>

In the present embodiment, the solubility of the poorly soluble organic compound contained in the negative electrode mixture layer may be less than or equal to 0.05 g/100 mL, but is preferably less than or equal to 0.01 g/100 mL, for example, from the viewpoint of further reducing the internal resistance of the secondary battery.

The method for measuring the solubility of the poorly soluble organic compound in water is as follows. First, 0.5 g of the poorly soluble organic compound is sealed in a bag obtained by processing a 400 mesh wire mesh, immersed in 100 mL of water, and gently stirred and left at a temperature of 25°C for 24 hours. After the immersion for 24 hours, the 400 mesh wire mesh enclosing the poorly soluble organic compound is dried in a dryer set at 110°C for 2 hours. A change in mass of the 400 mesh wire mesh enclosing the poorly soluble organic compound before and after water immersion is measured, and the solubility is calculated by the following equation.

The solubility [g/100 mL] = (the 400 mesh wire mesh [g] enclosing the poorly soluble organic compound before the immersion - the 400 mesh wire mesh [g] enclosing the poorly soluble organic compound after the immersion)

The poorly soluble organic compound is not particularly limited, but is preferably, for example, a polycyclic aromatic hydrocarbon, a car-type hydrocarbon, or the like. These may be used singly or in combination. The poorly soluble organic compound is more preferably a polycyclic aromatic hydrocarbon from the viewpoint of electrochemical stability and the like.

Examples of the polycyclic aromatic hydrocarbon include naphthalene, anthracene, pentacene, benzopyrene, chrysene, pyrene, triphenylene, corannulene, and ovalene. These may be used singly or in combination of two or more kinds thereof. Among them, anthracene, naphthalene, and triphenylene are preferable from the viewpoint of the significantly low solubility in water.

Examples of the cage hydrocarbon include adamantane, biadamantane, diamantane, triamantane, tetramantane, and dodecahedran. These may be used singly or in combination of two or more kinds thereof. Among them, adamantane is preferable from the viewpoint of the significantly low solubility in water and the like. The cage type refers to a molecule whose volume is determined based on a plurality of rings formed by covalently bonded atoms, and a point located in the volume cannot leave the volume without passing through the rings.

The content of the poorly soluble organic compound is preferably greater than or equal to 0.2 parts by mass and less than or equal to 3.0 parts by mass based on 100 parts by mass of the negative electrode active material. When the content of the poorly soluble organic compound is less than or equal to 3.0 parts by mass based on 100 parts by mass of the negative electrode active material, for example, the density of the negative electrode active material is improved and the capacity of the secondary battery is improved. When the content of the poorly soluble organic compound is greater than or equal to 0.2 parts by mass based on 100 parts by mass of the negative electrode active material, for example, the number of pores capable of reducing expansion and contraction of the Si-based material due to charging and discharging increases in the negative electrode mixture layer, and the effect of suppressing swelling of the negative electrode is improved.

The Si-based material contained in the negative electrode active material is not particularly limited as long as it can reversibly store and release ions such as lithium ions, and examples of the Si-based material include Si particles, alloy particles containing Si, and Si compound particles. These Si-containing materials may be used alone or in combination of two or more thereof.

The Si particles can be obtained, for example, using a gas phase method or by grinding silicon swarf finely, and whichever method is used for producing Si particles, the Si particles can be used. Examples of the alloy particles containing Si include alloys containing Si and a metal selected from alkali metals, alkaline earth metals, transition metals, rare earth metals, and combinations thereof. Examples of the Si compound particles include Si compound particles having a silicate phase and Si particles dispersed in the silicate phase, Si compound particles having a silicon oxide phase and Si particles dispersed in the silicon oxide phase, and Si compound particles having a carbon phase and Si particles dispersed in the carbon phase. Among them, Si compound particles having a silicate phase and Si particles dispersed in the silicate phase or Si compound particles having a carbon phase and Si particles dispersed in the carbon phase are preferable from the viewpoint of increasing the capacity of the secondary battery or suppressing degradation of charge-discharge cycle characteristics.

The silicate phase preferably includes, for example, at least one element selected from lithium, sodium, potassium, rubidium, cesium, francium, beryllium, magnesium, calcium, strontium, barium, and radium from the viewpoints of high lithium ion conductivity and the like. Among them, a silicate phase containing lithium (hereinafter, may be referred to as a lithium silicate phase) is preferable from the viewpoints of high lithium ion conductivity and the like.

The lithium silicate phase is represented by, for example, a formula: $Li_{2z}SiO_{2+z}$ ($0 < z < 2$). From the viewpoints of stability, ease of production, lithium ion conductivity, and the like, z preferably satisfies the relation of $0 < z < 1$, and more preferably $z = 1/2$.

The Si compound particles in which the Si particles are dispersed in the silicon oxide phase is represented by, for example, a general formula $SiO_x$ (in which x is preferably in the range of $0 < x < 2$, and more preferably in the range of $0.5 \leq x \leq 1.6$). The Si compound particles in which the Si particles are dispersed in the carbon phase are represented by, for example, a general formula SixC1y (in which x and y are preferably in the ranges of $0 < x \leq 1$ and $0 < y \leq 1$, and more preferably in the ranges of $0.3 \leq x \leq 0.45$ and $0.7 \leq y \leq 0.55$).

The Si-based material preferably has a particle surface on which a conductive film containing a material having high conductivity is formed. Examples of the conductive film include carbon films, metal films, and metal compound films, and a carbon film is preferable from the viewpoints of electrochemical stability and the like. The carbon film can be formed with, for example, a CVD method in which acetylene, methane, or the like is used, a method in which coal pitch, petroleum pitch, a phenol resin, or the like is mixed with a silicon-based active material and the mixture is heat-treated, or the like. The conductive film may also be formed by fixing a conductive filler such as carbon black to the particle surface of the Si-based material using a binder.

The content of the Si-based material is, for example, preferably greater than or equal to 30% by mass based on the total mass of the negative electrode active material from the viewpoint of, for example, increasing the capacity of the secondary battery. In addition, from the viewpoint of achieving a high capacity of the secondary battery and further suppressing swelling of the negative electrode, the content of the Si-based material is preferably greater than or equal to 30% by mass and less than or equal to 60% by mass, and more preferably greater than or equal to 35% by mass and less than or equal to 55% by mass based on the total mass of the negative electrode active material.

The average particle size of the Si-based material is preferably greater than or equal to 4 μm, for example, from the viewpoint of suppressing degradation of the charge-discharge cycle characteristics. In addition, the average particle size of the Si-based material is, for example, preferably greater than or equal to 4 μm and less than or equal to 12 μm, and more preferably greater than or equal to 6 μm and less than or equal to 10 μm from the viewpoint of suppressing degradation of the charge-discharge cycle characteristics and further suppressing swelling of the negative electrode.

Examples of the carbon material contained in the negative electrode active material include conventionally known carbon materials used as negative electrode active materials for secondary batteries, but graphite such as natural graphite such as scale-like graphite, massive graphite, and earth graphite, massive artificial graphite (MAG), and artificial graphite such as graphitized mesocarbon microbeads (MCMB) are preferable from the viewpoint of more suppressing degradation of the charge-discharge cycle characteristics.

The average particle size of the carbon material is, for example, preferably greater than or equal to 10 $\mu$m and less than or equal to 25 $\mu$m, and more preferably greater than or equal to 12 $\mu$m and less than or equal to 20 $\mu$m from the viewpoint of further suppressing swelling of the negative electrode.

The average particle size of each material is a volume average particle size D50, which is 50% of the volume integrated value in a particle size distribution obtained by laser diffraction scattering.

The content of the carbon material is, for example, preferably greater than or equal to 40% by mass and less than or equal to 70% by mass, more preferably greater than or equal to 45% by mass and less than or equal to 65% by mass based on the total mass of the negative electrode active material.

An example of a method for producing the negative electrode 12 will be described. The negative electrode 12 includes: a first step of applying a negative electrode paste containing a negative electrode active material containing a carbon material and a Si-based material, a poorly soluble organic compound (that is, an organic compound having a solubility in water of less than or equal to 0.05 g/100 mL), and a binder or the like added as necessary to a negative electrode current collector to prepare an applied film, and then rolling the applied film; and a second step of forming a negative electrode mixture layer by subjecting the applied film to a heat treatment after the first step. The average particle sizes and contents of the Si-based material and the carbon material are as described above, and will not be described.

In the second step, the applied film is heat-treated to form, in the negative electrode mixture layer, for example, small pores derived from evaporation of moisture and the like, and relatively large pores derived from sublimation of a poorly soluble organic compound and the like. That is, when the pore size distribution of the obtained negative electrode mixture layer is measured by mercury porosimetry, two peak values R1 and R2 are observed. For example, the peak value R1 is based on the small pores, and the peak value R2 is based on the pores larger than the pores of the peak value R1. As described above, even when the poorly soluble organic compound is sublimated by the heat treatment of the applied film, several percents of the poorly soluble organic compound do not come out of the applied film and remains in the obtained negative electrode mixture layer, but the expansion of the Si-based material due to charging and discharging is reduced by the pores based on the peak values R1 and R2 and formed in the negative electrode mixture layer, and the swelling of the negative electrode is suppressed. On the other hand, if a negative electrode paste containing no poorly soluble organic compound is used, only small pores are formed in an obtained negative electrode mixture layer. That is, if the pore size distribution of the obtained negative electrode mixture layer is measured by mercury porosimetry, usually, only one peak value based on the small pores is observed. As described above, in the negative electrode mixture layer exhibiting the pore size distribution having only the one peak value, it is difficult to suppress the swelling of the negative electrode by reducing the expansion of the Si-based material due to charging and discharging.

In the method for producing a negative electrode according to the present embodiment using a negative electrode paste containing a poorly soluble organic compound, the poorly soluble organic compound is hardly soluble in the negative electrode paste, and therefore when the poorly soluble organic compound is sublimated, aggregation due to recrystallization hardly occurs. Therefore, since the pores derived from the sublimation of the poorly soluble organic compound have a relatively uniform pore size, the electron conductivity of the negative electrode mixture layer is hardly inhibited, and an increase in the internal resistance of the battery is suppressed. On the other hand, if a negative electrode paste containing an organic compound having a solubility in water of greater than 0.05 g/100 mL is used, the organic compound is slightly soluble in the negative electrode paste, and therefore when the organic compound is sublimated, the organic compound dissolved in the negative electrode paste may be recrystallized and aggregated. Therefore, if a negative electrode mixture layer is produced using the negative electrode paste containing the organic compound, coarse pores are easily formed in the negative electrode mixture layer, and thus the electron conductivity may be lowered and the internal resistance of the battery may be increased as compared with the negative electrode mixture layer produced by using the negative electrode paste containing the poorly soluble organic compound.

The heat treatment temperature in the second step is not particularly limited as long as it is a temperature at which the poorly soluble organic compound sublimates. The heat treatment time in the second step only needs to be sufficient for sublimation of the poorly soluble organic compound in the applied film, and may be, for example, greater than or equal to 5 hours.

Specific examples of the poorly soluble organic compound are as described above. The average particle size of the poorly soluble organic compound is not particularly limited, but is preferably, for example, greater than or equal to 2 $\mu$m and less than or equal to 10 $\mu$m. By setting the average particle size of the poorly soluble organic compound within the above-described range, it is easy to control the peak value R2 in the pore size distribution of the negative electrode mixture layer within the range greater than or equal to 2 $\mu$m and less than or equal to 10 $\mu$m.

The peak values R1 and R2 in the pore size distribution of the negative electrode mixture layer can be controlled based on, for example, the average particle size of the poorly soluble organic compound, the average particle size of each material used for the negative active material, adjustment of the viscosity of the negative electrode paste by solvent addition or the like, adjustment of the heat treatment time and temperature, adjustment of the linear pressure during the rolling of the applied film, and the like. As described above, the peak value R2 in the pore size distribution of the negative electrode mixture layer is derived from the sublimation of the poorly soluble organic compound, and is preferably greater than the peak value R1. The preferred ranges of the peak values R1 and R2 are as described above.

The content of the poorly soluble organic compound in the negative electrode paste is preferably, for example, greater than or equal to 2 parts by mass and less than or equal to 30 parts by mass based on 100 parts by mass of the negative electrode active material. When the content of the poorly soluble organic compound in the negative electrode paste is within the above-described range, for example, the swelling of the negative electrode may be further suppressed or the battery capacity may be improved as compared with a case where the content is out of the above-described range.

Examples of the mixing of the raw materials such as the negative electrode active material, the poorly soluble organic compound, and the binder in obtaining the negative electrode paste include cutter mills, pin mills, bead mills, fine particle composing machines (devices in which shear force is generated between a rotor configured to rotate at high speed inside a tank and having a special shape and a collision plate), granulators, and kneading machines such as twin-screw extruders, and planetary mixers.

The negative electrode paste is applied using, for example, a slit die coater, a reverse roll coater, a lip coater, a blade coater, a knife coater, a gravure coater, or a dip coater.

In the first step, when the negative electrode paste is applied to the negative electrode current collector to obtain the applied film, the applied film is preferably heat-dried. The heating and drying temperature in the first step is preferably a temperature at which the poorly soluble organic compound is not sublimated, but a part of the poorly soluble organic compound may be sublimated by heating and drying.

The rolling of the applied film may be performed several times at a predetermined linear pressure, for example, with a roll press machine until the applied film has a predetermined thickness.

[Separator]

As the separator 13, for example, a porous sheet having ion permeability and insulating properties is used. Specific examples of the porous sheet include fine porous thin films, woven fabrics, and nonwoven fabrics. As a material of the separator 13, polyolefin such as polyethylene and polypropylene, and cellulose are suitable. The separator 13 may have a single-layered structure or a multilayered structure. On the surface of the separator, for example, a heat-resistant layer may be formed.

EXAMPLES

The present disclosure will be further described below with reference to Examples. However, the present disclosure is not limited to these Examples.

<Example>

[Production of Negative Electrode]

Graphite particles having an average particle diameter of 17 $\mu$m and a Si-based material having an average particle diameter of 8 $\mu$m and containing Si particles dispersed in a carbon phase were mixed at a mass ratio of 50 : 50. The mixture was used as a negative electrode active material. Then, the negative active material, carboxymethyl cellulose (CMC), styrene-butadiene copolymer rubber (SBR), multi-walled carbon nanotube, anthracene (solubility in water: 0.00013 g/100 mL, average particle size: 6.1 $\mu$m) were mixed at a mass ratio of 100 : 1 : 1 : 1 : 10, and the resulting mixture was mixed with arbitrary water to prepare a negative electrode paste. The negative electrode paste was applied to both surfaces of a negative electrode current collector made of a copper foil, and the applied film was dried and then rolled with a roller. Thereafter, the applied film was heat-treated at 200°C for 5 hours to produce a negative electrode in which a negative electrode mixture layer was formed on both surfaces of the negative electrode current collector. The mass of the applied film before the heat treatment and the mass of the applied film after the heat treatment were measured, and the difference between these masses was calculated as the amount of anthracene sublimated by the heat treatment. In addition, the difference between the amount of anthracene added in the preparation of the negative electrode paste and the amount of anthracene sublimated by the above-described heat treatment was calculated as the amount of anthracene remaining in the negative electrode mixture layer. Then, as a result of calculating the ratio (hereinafter, may be referred to as an anthracene residual ratio) of the amount of anthracene remaining in the negative electrode mixture layer to the mass of the negative electrode active material in the negative electrode mixture layer, the ratio was 0.9% by mass.

In the obtained negative electrode, the pore size distribution of the negative electrode mixture layer was measured by mercury porosimetry, and as a result, two peak values R1 and R2 were shown. The peak value R1 was 1.1 $\mu$m, and the peak value R2 was 5.3 $\mu$m.

[Production of Positive Electrode]

A lithium-transition metal composite oxide represented by $LiCo_{1/3}Mn_{1/3}Ni_{1/3}O_2$, acetylene black, and polyvinylidene fluoride were mixed at a mass ratio of 98 : 1 : 1, and then N-methyl-2-pyrrolidone (NMP) was added to prepare a positive electrode paste. The negative electrode paste was applied to both surfaces of an aluminum foil, the applied film was dried and then rolled with a roller to produce a positive electrode in which a positive electrode mixture layer was formed on both surfaces of a positive electrode current collector.

[Preparation of Non-Aqueous Electrolyte]

In a mixed solvent obtained by mixing ethylene carbonate (EC) and ethyl methyl carbonate (EMC) at a mass ratio of 1 : 3, $LiPF_6$ was dissolved at a concentration of 1 mol/L to prepare a non-aqueous electrolytic solution.

[Preparation of Test Cell]

The positive electrode and the negative electrode were stacked so as to face each other with a polyolefin separator interposed between the positive electrode and the negative electrode, and the resulting product was wound to produce an electrode assembly. Next, the electrode assembly was housed in a bottomed cylindrical battery case body, the non-aqueous electrolytic solution was injected, and then an opening of the battery case body was sealed with a gasket and a sealing assembly to produce a test cell.

<Comparative Example 1>

A negative electrode was produced in the same manner as in Examples except that a negative electrode paste was produced using fumaric acid (solubility in water: 0.63 g/100 mL, average particle size: 6.1 $\mu$m) instead of anthracene. Then, a test cell was prepared in the same manner as in Example except that the negative electrode was used.
In the same manner as in Example, the amount of fumaric acid remaining in the negative electrode mixture layer was calculated, and the ratio (hereinafter, fumaric acid residual ratio) of the amount of the fumaric acid remaining in the negative electrode mixture layer to the mass of the negative electrode active material in the negative electrode mixture layer was calculated. As a result, the ratio of the amount of the fumaric acid remaining in the negative electrode mixture layer was 0.9% by mass.
In the negative electrode of Comparative Example 1, the pore size distribution of the negative electrode mixture layer was measured by mercury porosimetry and showed two peak values R1 and R2, where the peak value R1 was 1.1 $\mu$m and the peak value R2 was 6.4 $\mu$m.

<Comparative Example 2>

A negative electrode was produced in the same manner as in Example except that anthracene was not used. A test cell was prepared in the same manner as in Example except that the negative electrode was used. In the negative electrode of Comparative Example 2, the pore size distribution of the negative electrode mixture layer was measured by mercury porosimetry and showed one peak value R1, where the peak value R1 was 1.1 $\mu$m.

[Evaluation of Swelling Rate of Negative Electrode]

The test cell in each of Example and Comparative Examples was charged at a constant current of 1/3 C under a temperature environment of 25°C until the battery voltage reached 4.2 V, and then charged at a constant voltage of 4.2 V until the current value reached 0.05 C. The test cell after the charging was disassembled, the negative electrode was taken out, and the thickness of the negative electrode after the charging was measured with a micro gauge. Then, the swelling rate of the negative electrode was calculated by the following equation, and the results are summarized in Table 1.

The swelling rate of the negative electrode (%) = (the thickness of the negative electrode after the charging/the thickness of the negative electrode at the time of production of the negative electrode) $\times$ 100

[Evaluation of Internal Resistance of Battery]

The test cell in each of Example and Comparative Examples was charged at a constant current of 1/3 C under a temperature environment of 25°C until the battery voltage reached 4.2 V, and then charged at a constant voltage of 4.2 V until the current value reached 0.05 C. Next, the inter-terminal resistance of each test cell was measured using a low resistance meter (AC 4-terminal method set at a measurement frequency of 1 kHz), and the resistance value at this time was taken as the internal resistance. The results are summarized in Table 1. In Table 1, the internal resistance of Comparative Example 1 is shown as a reference value (1.00), and the internal resistances of Example and Comparative Example 2 are shown as relative values.

[Table 1]

| | R1 (μm) | R2 (μm) | Organic compound | | | | Internal resistance of battery | Swelling rate of negative electrode(%) |
| | | | Name | Solubility in water (g/100 mL) | Particle size (μm) | Residual ratio in negative electrode mixture layer (wt%) | | |
|---|---|---|---|---|---|---|---|---|
| Example | 1.1 | 5.3 | Anthracene | 0.00013 | 6.1 | 0.9 | 0.93 | 125 |
| Comparative Example 1 | 1.1 | 6.4 | Fumaric acid | 0.63 | 6.1 | 0.9 | 1.00 | 125 |
| Comparative Example 2 | 1.1 | - | - | - | - | - | 1.08 | 150 |

As shown in Table 1, in Example using the negative electrode including the negative electrode mixture layer containing anthracene (solubility in water: 0.00013 g/100 mL) and having the two peak values R1 and R2 in the pore size distribution measured by mercury porosimetry, the swelling of the negative electrode could be suppressed as compared with Comparative Example 2 using the negative electrode including the negative electrode mixture layer not containing anthracene and having only the one peak value R1 in the pore size distribution measured by mercury porosimetry. Furthermore, in Example, the internal resistance of the battery was reduced as compared with Comparative Example 1 using the negative electrode including the negative electrode mixture layer containing fumaric acid (solubility in water: 0.63 g/100 mL) and having the two peak values R1 and R2 in the pore size distribution measured by mercury porosimetry.

[Supplementary Notes]

Configuration 1:

A negative electrode for secondary batteries, including:

a negative electrode current collector; and

a negative electrode mixture layer disposed on the negative electrode current collector, wherein

the negative electrode mixture layer contains a negative electrode active material containing a carbon material and an Si-based material, and an organic compound having a solubility in water of less than or equal to 0.05 g/100 mL, and

a pore size distribution of the negative electrode mixture layer measured by mercury porosimetry has two peak values R1 and R2.

Configuration 2:

The negative electrode for secondary batteries according to configuration 1, wherein the organic compound contains a polycyclic aromatic hydrocarbon.

Configuration 3:

The negative electrode for secondary batteries according to configuration 1 or 2, wherein the peak value R2 is based on pores derived from sublimation of the organic compound and is greater than the peak value R1.

Configuration 4:

The negative electrode for secondary batteries according to any one of configurations 1 to 3, wherein a content of the organic compound is greater than or equal to 0.2 parts by mass and less than or equal to 3.0 parts by mass based on 100 parts by mass of the negative electrode active material.

Configuration 5:

The negative electrode for secondary batteries according to any one of configurations 1 to 4, wherein the organic compound contains at least one selected from the group consisting of naphthalene, anthracene, pentacene, benzopyrene, chrysene, pyrene, triphenylene, cholannulene, and ovalene.

Configuration 6:

The negative electrode for secondary batteries according to any one of configurations 1 to 5, wherein the peak value R1 is greater than or equal to 0.5 $\mu$m and less than or equal to 1.5 $\mu$m.

Configuration 7:

The negative electrode for secondary batteries according to any one of configurations 1 to 6, wherein the peak value R2 is greater than or equal to 2 $\mu$m and less than or equal to 8 $\mu$m.

Configuration 8:

The negative electrode for secondary batteries according to any one of configurations 1 to 7, wherein the Si-based material contains a Si compound having a silicate phase and Si particles dispersed in the silicate phase.

Configuration 9:

The negative electrode for secondary batteries according to any one of configurations 1 to 8, wherein the Si-based material contains a Si compound having a carbon phase and Si particles dispersed in the carbon phase.

Configuration 10:

The negative electrode for secondary batteries according to any one of configurations 1 to 9, wherein a solubility of the organic compound in water is less than or equal to 0.01 g/100 mL.

Configuration 11:

A secondary battery including the negative electrode for secondary batteries according to any one of the configurations 1 to 10.

Configuration 12:

A method for producing a negative electrode for secondary batteries, including:

a first step of applying a negative electrode paste containing a negative electrode active material containing a carbon material and a Si-based material and an organic compound having a solubility in water of less than or equal to 0.05 g/100 mL to a negative electrode current collector to prepare an applied film, and then rolling the applied film; and
a second step of forming a negative electrode mixture layer by subjecting the applied film to a heat treatment after the first step, wherein
a pore size distribution of the negative electrode mixture layer measured by mercury porosimetry has two peak values R1 and R2.

Configuration 13:

The method for producing the negative electrode for secondary batteries according to configuration 12, wherein the organic compound contains a polycyclic aromatic hydrocarbon.

Configuration 14:

The method for producing the negative electrode for secondary batteries according to configuration 12 or 13, wherein the peak value R2 is based on pores derived from sublimation of the organic compound, and the peak value R2 is greater than the peak value R1.

Configuration 15:

The method for producing the negative electrode for secondary batteries according to any one of configurations 12 to 14, wherein the polycyclic aromatic hydrocarbon contains at least one selected from the group consisting of naphthalene, anthracene, pentacene, benzopyrene, chrysene, pyrene, triphenylene, cholannulene, and ovalene.

REFERENCE SIGNS LIST

| | |
|---|---|
| 10 | Secondary battery |
| 11 | Positive electrode |
| 12 | Negative electrode |
| 13 | Separator |
| 14 | Electrode assembly |
| 15 | Battery case |
| 16 | Case body |
| 17 | Sealing assembly |
| 18 | Insulating plate |
| 18, 19 | Insulating plate |
| 20 | Positive electrode lead |
| 21 | Negative electrode lead |
| 22 | Projecting portion |
| 23 | Filter |
| 24 | Lower vent member |
| 25 | Insulating member |
| 26 | Upper vent member |
| 27 | Cap |
| 28 | Gasket |

**Claims**

1.  The negative electrode for secondary batteries, comprising:

    a negative electrode current collector; and
    a negative electrode mixture layer disposed on the negative electrode current collector, wherein
    the negative electrode mixture layer contains a negative electrode active material containing a carbon material and an Si-based material, and an organic compound having a solubility in water of less than or equal to 0.05 g/100 mL, and
    a pore size distribution of the negative electrode mixture layer measured by mercury porosimetry has two peak values R1 and R2.

2.  The negative electrode for secondary batteries according to claim 1, wherein the organic compound contains a polycyclic aromatic hydrocarbon.

3.  The negative electrode for secondary batteries according to claim 1 or 2, wherein the peak value R2 is based on pores derived from sublimation of the organic compound and is greater than the peak value R1.

4. The negative electrode for secondary batteries according to claim 1 or 2, wherein a content of the organic compound is greater than or equal to 0.2 parts by mass and less than or equal to 3.0 parts by mass based on 100 parts by mass of the negative electrode active material.

5. The negative electrode for secondary batteries according to claim 1 or 2, wherein the organic compound contains at least one selected from the group consisting of naphthalene, anthracene, pentacene, benzopyrene, chrysene, pyrene, triphenylene, cholannulene, and ovalene.

6. The negative electrode for secondary batteries according to claim 1 or 2, wherein the peak value R1 is greater than or equal to 0.5 $\mu$m and less than or equal to 1.5 $\mu$m.

7. The negative electrode for secondary batteries according to claim 1 or 2, wherein the peak value R2 is greater than or equal to 2 $\mu$m and less than or equal to 8 $\mu$m.

8. The negative electrode for secondary batteries according to claim 1 or 2, wherein the Si-based material contains a Si compound having a silicate phase and Si particles dispersed in the silicate phase.

9. The negative electrode for secondary batteries according to claim 1 or 2, wherein the Si-based material contains a Si compound having a carbon phase and Si particles dispersed in the carbon phase.

10. The negative electrode for secondary batteries according to claim 1 or 2, wherein a solubility of the organic compound in water is less than or equal to 0.01 g/100 mL.

11. A secondary battery comprising the negative electrode for secondary batteries according to claim 1 or 2.

12. A method for producing a negative electrode for secondary batteries, comprising:

a first step of applying a negative electrode paste containing a negative electrode active material containing a carbon material and a Si-based material and an organic compound having a solubility in water of less than or equal to 0.05 g/100 mL to a negative electrode current collector to prepare an applied film, and then rolling the applied film; and
a second step of forming a negative electrode mixture layer by subjecting the applied film to a heat treatment after the first step, wherein
a pore size distribution of the negative electrode mixture layer measured by mercury porosimetry has two peak values R1 and R2.

13. The method for producing the negative electrode for secondary batteries according to claim 12, wherein the organic compound contains a polycyclic aromatic hydrocarbon.

14. The method for producing the negative electrode for secondary batteries according to claim 12 or 13, wherein the peak value R2 is based on pores derived from sublimation of the organic compound, and the peak value R2 is greater than the peak value R1.

15. The method for producing the negative electrode for secondary batteries according to claim 12 or 13, wherein the polycyclic aromatic hydrocarbon contains at least one selected from the group consisting of naphthalene, anthracene, pentacene, benzopyrene, chrysene, pyrene, triphenylene, cholannulene, and ovalene.

# Figure 1

## INTERNATIONAL SEARCH REPORT

| International application No. |
| --- |
| **PCT/JP2024/003932** |

**A.    CLASSIFICATION OF SUBJECT MATTER**

*H01M 4/134*(2010.01)i; *H01M 4/133*(2010.01)i; *H01M 4/1393*(2010.01)i; *H01M 4/1395*(2010.01)i; *H01M 4/36*(2006.01)i; *H01M 4/38*(2006.01)i; *H01M 4/587*(2010.01)i; *H01M 4/62*(2006.01)i

FI:    H01M4/134; H01M4/133; H01M4/587; H01M4/38 Z; H01M4/36 E; H01M4/62 Z; H01M4/36 A; H01M4/1393; H01M4/1395

According to International Patent Classification (IPC) or to both national classification and IPC

**B.    FIELDS SEARCHED**

Minimum documentation searched (classification system followed by classification symbols)

H01M4/134; H01M4/133; H01M4/1393; H01M4/1395; H01M4/36; H01M4/38; H01M4/587; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2014/128844 A1 (HITACHI, LTD.) 28 August 2014 (2014-08-28) example 3 | 1-15 |
| A | JP 2021-39862 A (JSR CORPORATION) 11 March 2021 (2021-03-11) paragraphs [0134]-[0138], comparative example 6, table 2 | 1-15 |
| A | JP 2012-124115 A (HITACHI CHEM CO., LTD.) 28 June 2012 (2012-06-28) example 1 | 1-15 |
| A | JP 2020-533771 A (LG CHEM, LTD.) 19 November 2020 (2020-11-19) claim 1 | 1-15 |

☐ Further documents are listed in the continuation of Box C.        ☑ See patent family annex.

| | |
| --- | --- |
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **15 April 2024** | **07 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

### INTERNATIONAL SEARCH REPORT
**Information on patent family members**

International application No.

**PCT/JP2024/003932**

| Patent document cited in search report | | | Publication date (day/month/year) | Patent family member(s) | | | Publication date (day/month/year) |
|---|---|---|---|---|---|---|---|
| WO | 2014/128844 | A1 | 28 August 2014 | (Family: none) | | | |
| JP | 2021-39862 | A | 11 March 2021 | JP | 6791324 | B1 | |
| JP | 2012-124115 | A | 28 June 2012 | US | 2013/0302675 | A1 | |
| | | | | example 1 | | | |
| | | | | WO | 2012/077785 | A1 | |
| | | | | EP | 2650954 | A1 | |
| | | | | CN | 103262314 | A | |
| | | | | KR | 10-2013-0087609 | A | |
| JP | 2020-533771 | A | 19 November 2020 | US | 2021/0028461 | A1 | |
| | | | | claim 1 | | | |
| | | | | WO | 2019/054816 | A1 | |
| | | | | EP | 3678239 | A1 | |
| | | | | KR | 10-2019-0030983 | A | |
| | | | | CN | 111095634 | A | |

Form PCT/ISA/210 (patent family annex) (July 2022)

**REFERENCES CITED IN THE DESCRIPTION**

**Patent documents cited in the description**

- JP 2013219059 A